# EUROPEAN PATENT SPECIFICATION

(11) **EP 1 378 409 B1**
(45) Date of publication and mention of the grant of the patent: **28.09.2005**
(21) Application number: 03380147.3
(22) Date of filing: 20.06.2003
(51) Int. Cl.: B60T 7/06, G05G 1/14

(54) **Modular pedal**
Pedal
Pédale

(30) Priority: 05.07.2002 ES 200201577
(43) Date of publication of application: 07.01.2004
(73) Proprietor: BATZ, S. COOP., 48140 Igorre (Bizkaia) (ES)
(72) Inventor: Burguera Albizuri, Fernando, 48014 Bilbao (Bizkaia) (ES)
(74) Representative: Fernandez Guzman, Juan

(56) References cited:
- EP-A- 0 896 162
- EP-A- 1 260 419
- US-A- 5 690 000

## Description

### TECHNICAL FIELD

The invention herein refers to pedals for vehicular use.

### PRIOR ART

Pedals for vehicles are well-known which comprise a pedal body which rotates around an axis of rotation, a socket which houses said axis of rotation, a shoe, and, if they are brake or clutch pedals, an additional part which houses the end of an actuator rod (a servo-brake or gear cylinder respectively), all the parts of said pedals being metallic and being welded together.

Likewise, pedals, which are made entirely of plastic, are well-known, although said pedals are used for more minor functions, such as accelerator and clutch pedals, due to the mechanical properties of plastic.

Pedals for vehicles in which the additional part for housing the end of said rod is not metallic, but, in general, is made of plastic, are also well-known.

ES 2 020 932 B3 describes a pedal which comprises a pedal body and a part for housing the end of the actuator rod, such housing part including an additional part made of plastic which can be fitted elastically into the body of the pedal and also including an elastic device for holding the end of said rod.

EP 0 896 162 A1 discloses a device for holding the end of the servo-brake rod for brake pedals. Said holding device comprises an additional detachable part, preferably made of plastic, which comprises elastic devices for holding the end of the rod.

### DESCRIPTION OF THE INVENTION

The object of the invention is to provide a modular pedal for vehicles as defined in the claims.

The modular pedal of the invention comprises a pedal body that pivots around an axis of rotation, and a support part fixed to said pedal body, it being possible for said support part to be made of a material different from that of which the pedal body is made, and said material preferably being plastic. Said support part comprises a socket with a hole for the axis of rotation, producing a joint between the pedal body and said axis of rotation via said support part.

The fact that the body of the pedal is not directly joined to the axis of rotation means that said pedal body can have a shape more suited to its function, thereby containing less material or, otherwise, the material used having some less-demanding mechanical characteristics. In this way, given that the body of the pedal is generally metallic and the material of the support part is preferably lighter, the pedal as a whole is lighter and cheaper. In addition, the simplicity of the assembly between pedal body and support part significantly reduces the cost of production.

The pedal body comprises a housing into which the support part is inserted, said support part being joined to said pedal body via an elastic joint, preferably a detachable clip, to avoid welded joints, thus simplifying the assembly.

The pedal body has a cross-section that is substantially U-shaped, the housing for the support part being delimited by said U-shape. The support part has side projections, and said pedal body has holes or supports into which said projections fit. The pedal body can comprise two side extensions that rest on part of the outer surface of the socket that has the hole for the axis of rotation.

The support part can also comprise housing means in which the end of a rod can be fitted via which a driving force is transmitted to an actuator, principally to a servo-brake or clutch cylinder.

The characteristics and advantages of the invention described above and other characteristics and additional advantages will become clear upon seeing the drawings and from the detailed description of the invention.

### DESCRIPTION OF THE DRAWINGS

FIG. 1 is a perspective view of an embodiment of the pedal invention with the parts of the pedal assembled.
FIG. 2 is an exploded view of the pedal in FIG. 1.
FIG. 3 is a perspective view of the support part of the pedal of the embodiment in FIG. 1 with the side walls removed.
FIG. 4 is a perspective view of the support part of the pedal of the embodiment in FIG. 1 with the side walls in their assembled position.
FIG. 5 is a cross-section of the pedal of the embodiment in FIG. 1.
FIG. 6 is a profile view of the support part and the pedal body of the pedal of the embodiment in FIG. 1 during assembly of said pedal.
FIG. 7 is a perspective view of the support part of a second embodiment of the invention.
FIG. 8 is a profile view and half section view of the support part in FIG. 7 before inserting the end of the rod into said support part.
FIG. 9 is a profile view and half section view of the support part in FIG. 7 once the end of the rod has been inserted into said support part.
FIG. 10 is a perspective view of the lower end of the pedal body and the shoe, with an intermediate part between both parts.

### DETAILED DESCRIPTION OF THE INVENTION

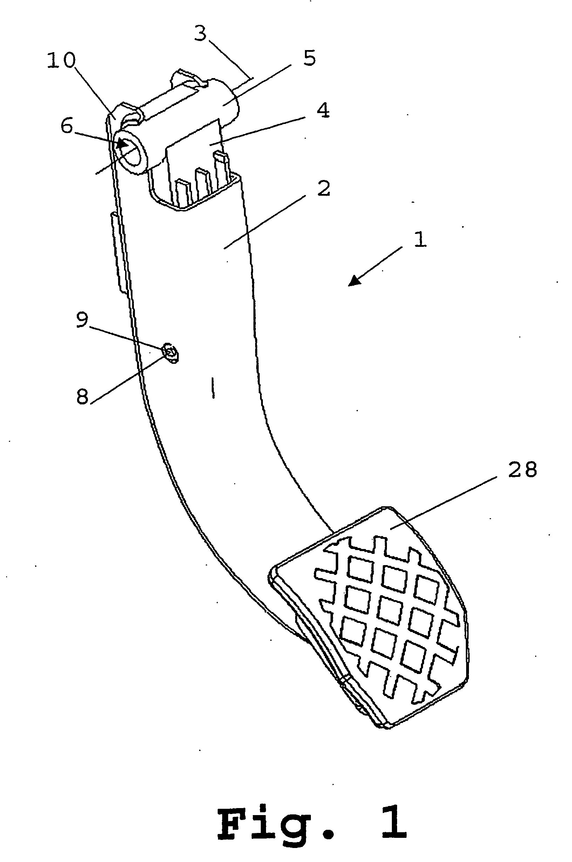

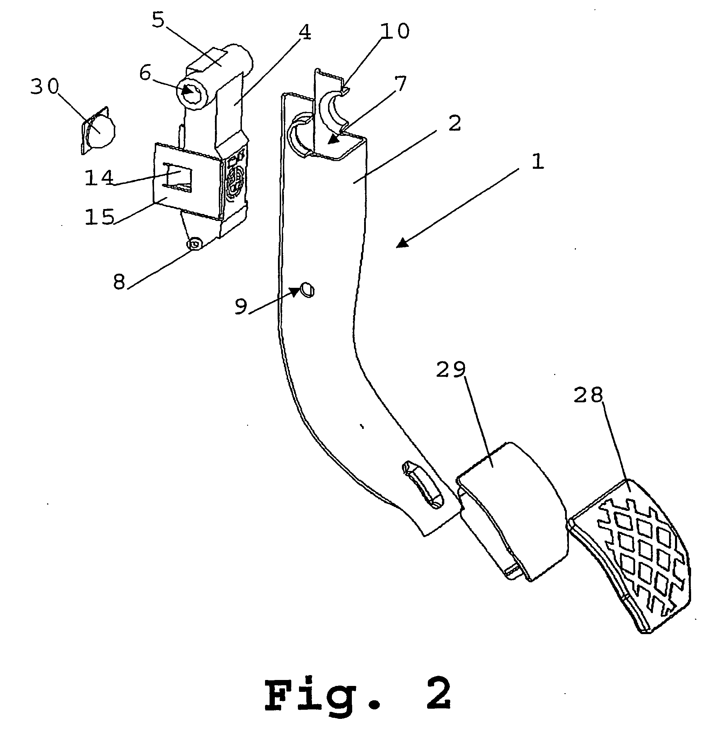

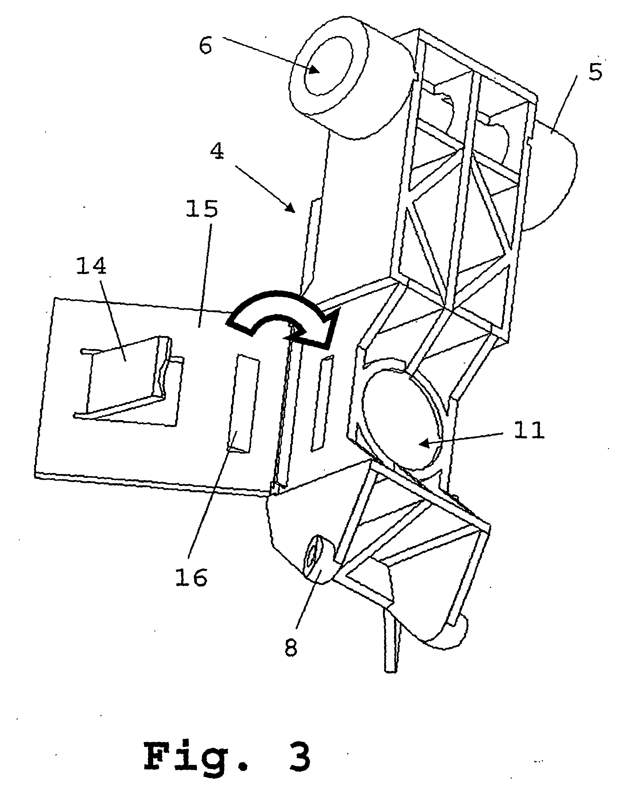

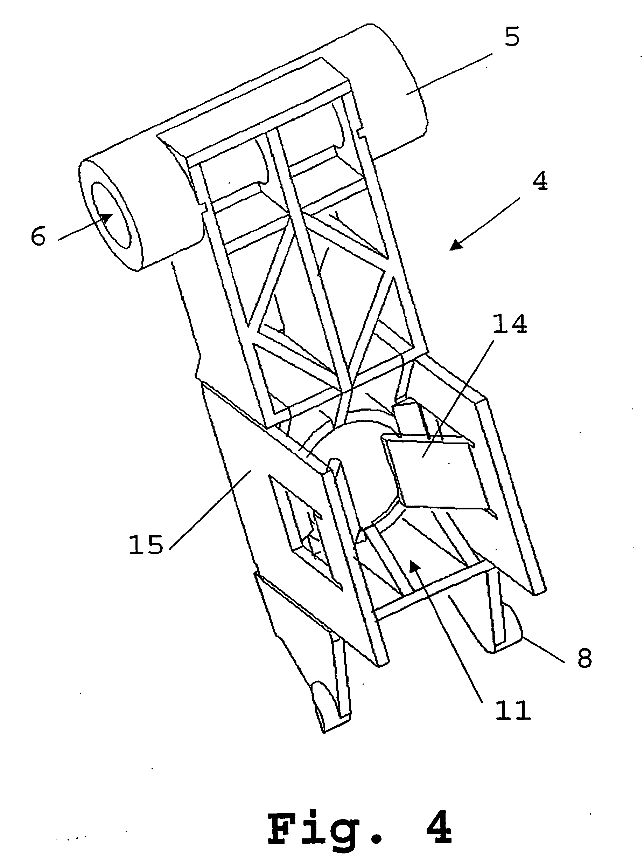

With reference to figures 1 and 2, the modular pedal comprises a pedal body 2 which pivots around an axis of rotation 3, and a support part 4 fixed to said pedal body 2, it being possible for said support part 4 to be made of a material different from that of which the pedal body is made 2, and said material preferably being plastic. Said support part 4, shown in detail in figures 3 and 4, comprises a socket 5 with a hole 6 for the axis of rotation 3, producing a joint between the pedal body 2 and said axis of rotation 3 via said support part 4.

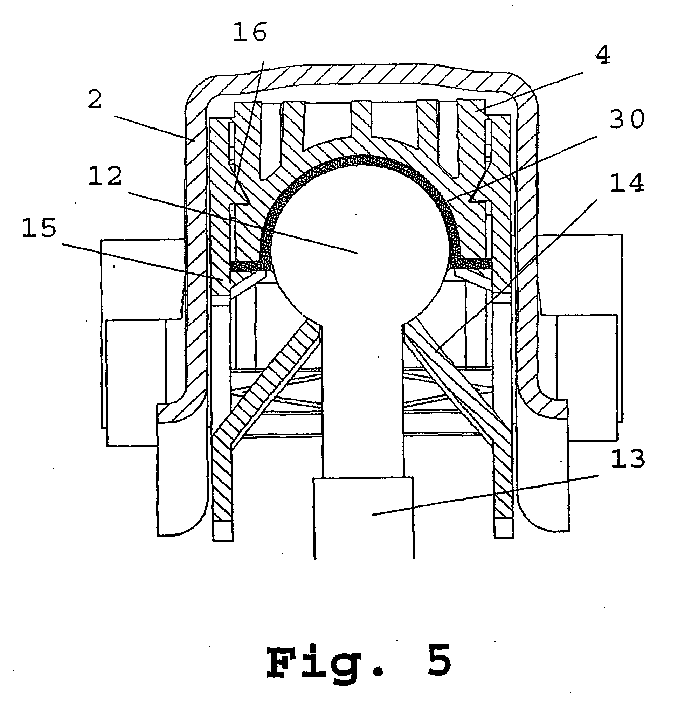

The pedal body 2 comprises a housing 7 into which the support part 4 is inserted, said support part 4 being joined to said pedal body 2 via an elastic joint, preferably a detachable clip. As can be seen in figure 5, the pedal body 2 has a cross-section that is substantially U-shaped, the housing 7 being delimited by said U-shape. The support part 4 has side projections 8, and said pedal body 2 has holes or supports 9 into which said projections 8 fit.

The pedal body 2 can comprise two side extensions 10 that rest on part of the outer surface of the socket 5 of the support part 4. In this embodiment, the outer surface of the socket 5 is substantially cylindrical and the side projections 10 rest on approximately half of the outer perimeter of said socket 5.

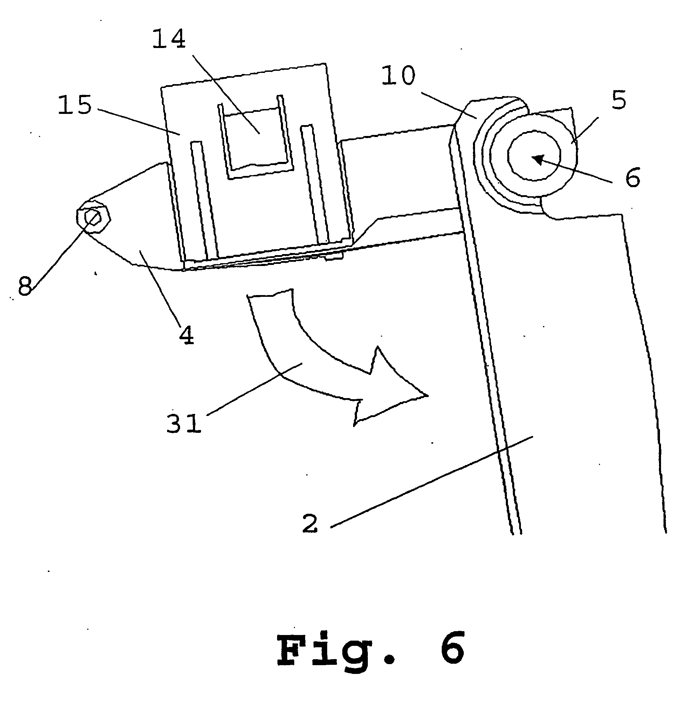

The configuration of the pedal body 2 and the support part 4 according to the invention allow quick and easy assembly of both parts. Figure 6 shows how said assembly is carried out. Firstly, the socket 5 rests on the support part 4 on the side projections 10 of the pedal body 2, and the pedal body 2 is then inserted into the housing 7 turning it in direction 31.

The support part 4 can also comprise housing means 11 in which the end 12 of a rod 13 is fitted via which a driving force is transmitted to an actuator, principally to a servo-brake or clutch cylinder.

In the embodiment in figures 1 to 6, the housing means 11 comprise an elastic holding device 14 at the entrance of the housing means 11, and side walls 15, said elastic holding device 14 being joined to said side walls 15 and the side walls 15 being removable. Each side wall 15 has a support or clip 16 which holds said side wall 15 in its assembly position, and which transmits the force exerted by the end 12 of the actuator onto the holding device 14 to the whole of the support part 4. The end 12 of the rod 13 of the housing means 11 can be pulled out via the folding side walls 15, if necessary. To do this, the support part 4 only has to be pulled out from the housing 7 of the pedal body 2 and the side walls 15 removed.

In cases where a great amount of pressure is transmitted by the rod 13 a jacket 30 may have to be inserted between the end 12 of the rod 13 and the housing means 11 of the support part 4. In the embodiments shown in the drawings, the end 12 of the rod 13 is spherical, with which said jacket 30 has an almost semi-spherical surface.

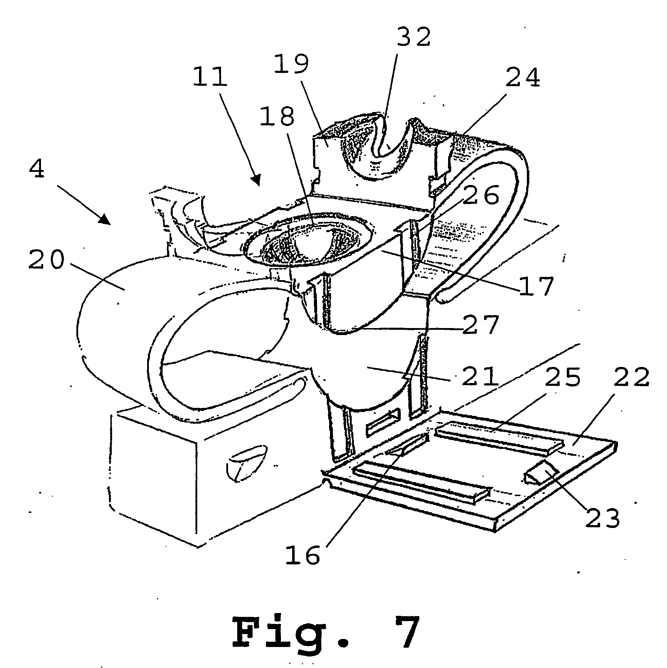

In a second embodiment which comprises the support part 4 shown in Figures 7, 8 and 9, the housing means 11 comprise a movable part 17 with a housing 18 in which approximately half of the end 12 of the rod 13 is fitted or, alternatively, the jacket 30, folding side housings 19 hingedly joined to the movable part 17, laminated side springs 20 joined to said folding housings 19, and a support surface 21 for the movable part 17.

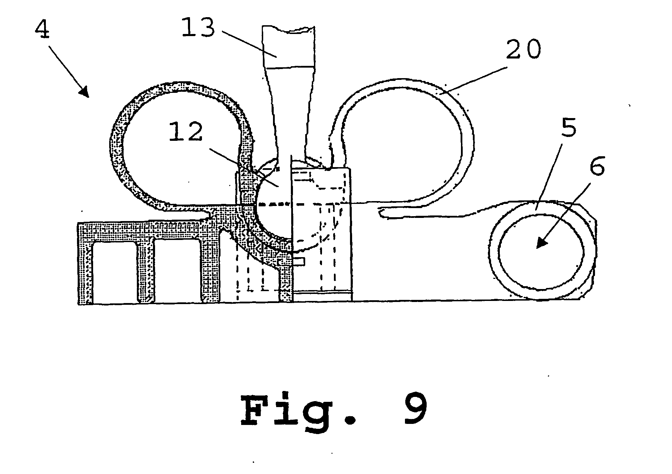

When during assembly the end 12 of the rod 13 presses on the housing 18, the laminated springs 20 are compressed, the movable part 17 is moved to rest on the surface 21, and the folding housings 19 support the end 12 of the rod 13 due to the action of the laminated springs 20, as shown in Figure 9.

In the embodiment in figures 7, 8 and 9, the end 12 of the rod 13 is substantially spherical, with which the housing 18 has a substantially semi-spherical internal surface and the folding housings 19 have an internal surface which is substantially a quarter of a sphere. Said folding housings 19 also have a groove 32 for holding the rod 13.

In this embodiment, the support part 4 also comprises folding side walls 22, each side wall 22 incorporating a flange 23, and the folding housings 19 have projections 24, said flanges 23 being shoed in the projections 24 when the end 13 of the rod 12 presses on the housing 11 and the movable part 17 presses on the surface 21. The side walls 22 have longitudinal guide bars 25 and the movable part 17 has longitudinal grooves 26 , said guide bars 25 being held in said grooves 26. The surface 21 of the support part 4 and the surface 27 of the movable part 17 are cylindrical.

By means of this second embodiment a solution is obtained whereby, as in the first solution, the end 12 of the rod 13 can be easily released when necessary. In addition, the support part for the end 12, the housing 18, is incorporated in the support part 4. Likewise, there is no need to include any funnelled surface to guide the end 12 of the rod 13 towards the housing 18, since the contact between both is made without any force.

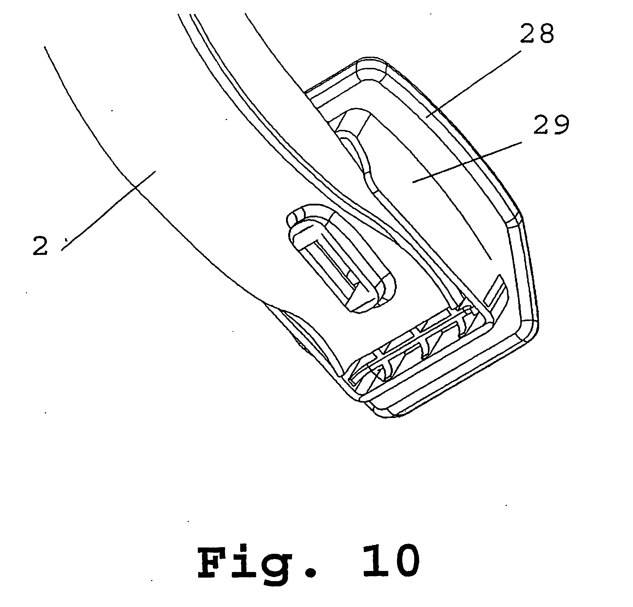

With reference to figure 10, in the two embodiments described, the modular pedal comprises a shoe 28 and an intermediate part 29 between said shoe 28 and the pedal body 2, said intermediate part 29 may be made of a different material from that of which the pedal body 2 is made, and said material preferably being plastic. Said intermediate part 29 is joined elastically to the pedal body 2, preferably via a detachable clip.

By using the intermediate part 29 the pedal body 2 adopts a straighter shape, so that it undergoes less force and can therefore contain less material or, otherwise, a material with less-demanding characteristics, which makes pedal 1 lighter and/or cheaper. The use of said intermediate part 29 allows the optimum position of the shoe 28 to be obtained with a simpler and sturdier geometry for the pedal body 2, now that said pedal body 2 can be less curved.

The shoe 28 and the intermediate part 29 can be embodied in a single integral part.

### TECHNICAL FIELD

The invention herein refers to pedals for vehicular use.

EP-A-1 260 419, published on 27.11.2002, discoses a pedal in which the support part comprises a socket with a hole for the axis of rotation and produces a joint between the pedal body and said axis of rotation.

### PRIOR ART

Pedals for vehicles are well-known which comprise a pedal body which rotates around an axis of rotation, a socket which houses said axis of rotation, a shoe, and, if they are brake or clutch pedals, an additional part which houses the end of an actuator rod (a servo-brake or gear cylinder respectively), all the parts of said pedals being metallic and being welded together.

Likewise, pedals, which are made entirely of plastic, are well-known, although said pedals are used for more minor functions, such as accelerator and clutch pedals, due to the mechanical properties of plastic.

Pedals for vehicles in which the additional part for housing the end of said rod is not metallic, but, in general, is made of plastic, are also well-known.

ES 2 020 932 B3 describes a pedal which comprises a pedal body and a part for housing the end of the actuator rod, such housing part including an additional part made of plastic which can be fitted elastically into the body of the pedal and also including an elastic device for holding the end of said rod.

EP 0 896 162 A1 discloses a device for holding the end of the servo-brake rod for brake pedals. Said holding device comprises an additional detachable part, preferably made of plastic, which comprises elastic devices for holding the end of the rod.

### DESCRIPTION OF THE INVENTION

The object of the invention is to provide a modular pedal for vehicles as defined in the claims.

The modular pedal of the invention comprises a pedal body that pivots around an axis of rotation, and a support part fixed to said pedal body, it being possible for said support part being made of a material different from that of which the pedal body is made, and said material preferably being plastic. Said support part comprises a socket with a hole for the axis of rotation, producing a joint between the pedal body and said axis of rotation via said support part.

The fact that the body of the pedal is not directly joined to the axis of rotation means that said pedal body can have a shape more suited to its function, thereby containing less material or, otherwise, the material used having some less-demanding mechanical characteristics. In this way, given that the body of the pedal is generally metallic and the material of the support part is preferably lighter, the pedal as a whole is lighter and cheaper. In addition, the simplicity of the assembly between pedal body and support part significantly reduces the cost of production.

The pedal body comprises a housing into which the support part is inserted, said support part being joined to said pedal body via an elastic joint, preferably a detachable clip, to avoid welded joints, thus simplifying the assembly.

The pedal body has a cross-section that is substantially U-shaped, the housing for the support part being delimited by said U-shape. The support part has side projections, and said pedal body has holes or supports into which said projections fit. The pedal body can comprise two side extensions that rest on part of the outer surface of the socket that has the hole for the axis of rotation.

The support part can also comprise housing means in which the end of a rod can be fitted via which a driving force is transmitted to an actuator, principally to a servo-brake or clutch cylinder.

The characteristics and advantages of the invention described above and other characteristics and additional advantages will become clear upon seeing the drawings and from the detailed description of the invention.

### DESCRIPTION OF THE DRAWINGS

FIG. 1 is a perspective view of an embodiment of the pedal invention with the parts of the pedal assembled.
FIG. 2 is an exploded view of the pedal in FIG. 1.
FIG. 3 is a perspective view of the support part of the pedal of the embodiment in FIG. 1 with the side walls removed.
FIG. 4 is a perspective view of the support part of the pedal of the embodiment in FIG. 1 with the side walls in their assembled position.
FIG. 5 is a cross-section of the pedal of the embodiment in FIG. 1.
FIG. 6 is a profile view of the support part and the pedal body of the pedal of the embodiment in FIG. 1 during assembly of said pedal.
FIG. 7 is a perspective view of the support part of a second embodiment of the invention.

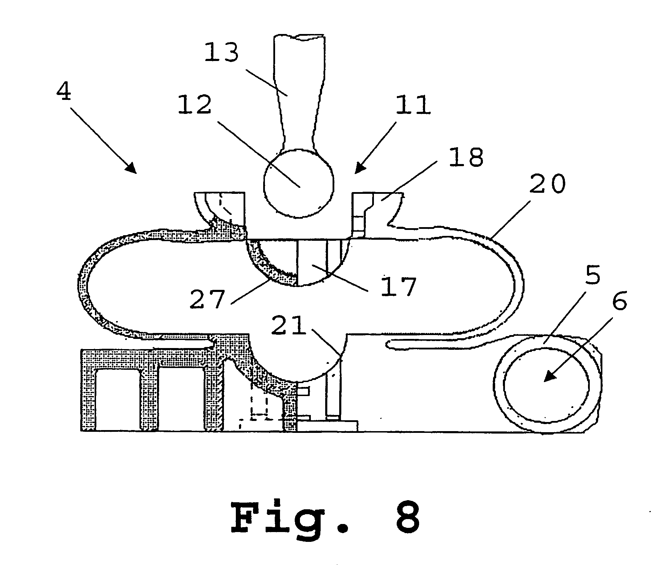

FIG. 8 is a profile view and half section view of the support part in FIG. 7 before inserting the end of the rod into said support part.
FIG. 9 is a profile view and half section view of the support part in FIG. 7 once the end of the rod has been inserted into said support part.
FIG. 10 is a perspective view of the lower end of the pedal body and the shoe, with an intermediate part between both parts.

### DETAILED DESCRIPTION OF THE INVENTION

With reference to figures 1 and 2, the modular pedal comprises a pedal body 2 which pivots around an axis of rotation 3, and a support part 4 fixed to said pedal body 2, said support part 4 being made of a material different from that of which the pedal body is made 2, and said material preferably being plastic. Said support part 4, shown in detail in figures 3 and 4, comprises a socket 5 with a hole 6 for the axis of rotation 3, producing a joint between the pedal body 2 and said axis of rotation 3 via said support part 4.

The pedal body 2 comprises a housing 7 into which the support part 4 is inserted, said support part 4 being joined to said pedal body 2 via an elastic joint, preferably a detachable clip. As can be seen in figure 5, the pedal body 2 has a cross-section that is substantially U-shaped, the housing 7 being delimited by said U-shape. The support part 4 has side projections 8, and said pedal body 2 has holes or supports 9 into which said projections 8 fit.

The pedal body 2 can comprise two side extensions 10 that rest on part of the outer surface of the socket 5 of the support part 4. In this embodiment, the outer surface of the socket 5 is substantially cylindrical and the side projections 10 rest on approximately half of the outer perimeter of said socket 5.

The configuration of the pedal body 2 and the support part 4 according to the invention allow quick and easy assembly of both parts. Figure 6 shows how said assembly is carried out. Firstly, the socket 5 rests on the support part 4 on the side projections 10 of the pedal body 2, and the pedal body 2 is then inserted into the housing 7 turning it in direction 31.

The support part 4 can also comprise housing means 11 in which the end 12 of a rod 13 is fitted via which a driving force is transmitted to an actuator, principally to a servo-brake or clutch cylinder.

In the embodiment in figures 1 to 6, the housing means 11 comprise an elastic holding device 14 at the entrance of the housing means 11, and side walls 15, said elastic holding device 14 being joined to said side walls 15 and the side walls 15 being removable. Each side wall 15 has a support or clip 16 which holds said side wall 15 in its assembly position, and which transmits the force exerted by the end 12 of the actuator onto the holding device 14 to the whole of the support part 4. The end 12 of the rod 13 of the housing means 11 can be pulled out via the folding side walls 15, if necessary. To do this, the support part 4 only has to be pulled out from the housing 7 of the pedal body 2 and the side walls 15 removed.

In cases where a great amount of pressure is transmitted by the rod 13 a jacket 30 may have to be inserted between the end 12 of the rod 13 and the housing means 11 of the support part 4. In the embodiments shown in the drawings, the end 12 of the rod 13 is spherical, with which said jacket 30 has an almost semi-spherical surface.

In a second embodiment which comprises the support part 4 shown in Figures 7, 8 and 9, the housing means 11 comprise a movable part 17 with a housing 18 in which approximately half of the end 12 of the rod 13 is fitted or, alternatively, the jacket 30, folding side housings 19 hingedly joined to the movable part 17, laminated side springs 20 joined to said folding housings 19, and a support surface 21 for the movable part 17.

When during assembly the end 12 of the rod 13 presses on the housing 18, the laminated springs 20 are compressed, the movable part 17 is moved to rest on the surface 21, and the folding housings 19 support the end 12 of the rod 13 due to the action of the laminated springs 20, as shown in Figure 9.

In the embodiment in figures 7, 8 and 9, the end 12 of the rod 13 is substantially spherical, with which the housing 18 has a substantially semi-spherical internal surface and the folding housings 19 have an internal surface which is substantially a quarter of a sphere. Said folding housings 19 also have a groove 32 for holding the rod 13.

In this embodiment, the support part 4 also comprises folding side walls 22, each side wall 22 incorporating a flange 23, and the folding housings 19 have projections 24, said flanges 23 being shoed in the projections 24 when the end 13 of the rod 12 presses on the housing 11 and the movable part 17 presses on the surface 21. The side walls 22 have longitudinal guide bars 25 and the movable part 17 has longitudinal grooves 26 , said guide bars 25 being held in said grooves 26. The surface 21 of the support part 4 and the surface 27 of the movable part 17 are cylindrical.

By means of this second embodiment a solution is obtained whereby, as in the first solution, the end 12 of the rod 13 can be easily released when necessary. In addition, the support part for the end 12, the housing 18, is incorporated in the support part 4. Likewise, there is no need to include any funnelled surface to guide the end 12 of the rod 13 towards the housing 18, since the contact between both is made without any force.

With reference to figure 10, in the two embodiments described, the modular pedal comprises a shoe 28 and an intermediate part 29 between said shoe 28 and the pedal body 2, said intermediate part 29 may be made of a different material from that of which the pedal body 2 is made, and said material preferably being plastic. Said intermediate part 29 is joined elastically to the pedal body 2, preferably via a detachable clip.

By using the intermediate part 29 the pedal body 2 adopts a straighter shape, so that it undergoes less force and can therefore contain less material or, otherwise, a material with less-demanding characteristics, which makes pedal 1 lighter and/or cheaper. The use of said intermediate part 29 allows the optimum position of the shoe 28 to be obtained with a simpler and sturdier geometry for the pedal body 2, now that said pedal body 2 can be less curved.

The shoe 28 and the intermediate part 29 can be embodied in a single integral part.

## Claims (Claims for the following Contracting State(s): AT, BE, BG, CH, CY, CZ, DK, EE, FI, GR, HU, IE, LI, LU, MC, NL, PT, RO, SI, SK, TR)

1. Modular pedal for vehicles which comprises a pedal body (2) which pivots around an axis of rotation (3), and a support part (4) fixed to said pedal body (2), it being possible for said support part (4) to be made of a material different from that of which the pedal body (2) is made, and said material preferably being plastic, **characterised in that** said support part (4) comprises a socket (5) with a hole (6) for the axis of rotation (3), producing a joint between the pedal body (2) and said axis of rotation (3) via said support part (4).

2. Modular pedal according to claim 1, **characterised in that** the pedal body (2) comprises a housing (7) wherein the support part (4) is inserted, said support part (4) being joined to said pedal body (2) via an elastic joint, preferably a detachable clip.

3. Modular pedal according to claim 2, **characterised in that** the pedal body (2) has a cross-section that is substantially U-shaped, the housing (7) being delimited by said U-shape, the support part (4) comprises side projections (8), and said pedal body (2) comprises holes or supports (9) wherein said projections fit (8).

4. Modular pedal according to claim 3, **characterised in that** the pedal body (2) comprises two side extensions (10) which rest on part of the outer surface of the part (5) of the support part (4).

5. Modular pedal according to claim 4, **characterized in that** the outer surface of the part (5) is substantially cylindrical and the side projections (10) rest on approximately half of the outer perimeter of said socket (5).

6. Modular pedal according to claims 3, 4 or 5, **characterised in that** the support part (4) also comprises housing means (11) wherein the end (12) of a rod (13) is fitted via which a driving force is transmitted to an actuator, principally to a servo-brake or clutch cylinder.

7. Modular pedal according to claim 6, **characterised in that** the housing means (11) comprise an elastic holding device (14) in the entrance of the housing means (11), and side walls (15), said holding device (14) being joined to said side walls (15) and said side walls (15) being foldable.

8. Modular pedal according to claim 7, **characterised in that** each side wall (15) comprises at least one clip (16) which holds said side wall (15) in its assembly position, and which transmits the force exerted by the end (12) of the actuator onto the holding device (14) to the whole of the support part (4).

9. Modular pedal according to claim 6, **characterised in that** the housing (11) comprises a movable part (17) with a housing (18) wherein approximately half of the end (12) of the rod (13) is fitted, folding side housings (19) hingedly joined to the movable part (17), laminated side springs (20) joined to said folding housings (20), and a support surface (21) for the movable part (17), in such a way that, when during assembly the end (12) of the rod (13) presses on the housing (18), the laminated springs (20) are compressed, the movable part (17) is moved to rest on the surface (21), and the folding housings (19) support the end (12) of the rod (13) due to the action of the laminated springs (20).

10. Modular pedal according to claim 9, **characterised in that** the end (12) of the rod (13) is substantially spherical, the housing (18) has a substantially semi-spherical internal surface, and the folding housings (19) have an internal surface which are substantially a quarter of a sphere, said folding housings (19) also having a groove (21) for holding the rod (13).

11. Modular pedal according to claim 9 or 10, **characterised in that** the support part (4) also comprises folding side walls (22), each side wall (22) incorporating a flange (23), and the folding housings (19) comprise projections (24), said flanges (23) being shoed in the projections (24) when the end (13) of the rod (12) presses on the housing (11) and the movable part (10) presses on the surface (21).

12. Modular pedal according to claim 11, **characterised in that** the side walls (22) comprise longitudinal guide bars (25) and the longitudinal movable part (10) has grooves (26), said guide bars (25) being held in said grooves (26).

13. Modular pedal according to any of claims 9 to 12, **characterised in that** the surface (21) and the surface (27) of the movable part (10) are cylindrical.

14. Modular pedal according to any of the preceding claims, **characterised in that** it comprises a shoe (28) and an intermediate part (29) between said shoe (28) and the pedal body (2), said intermediate part (29) may be made of a different material from that of which the pedal body (2) is made, and said material preferably being plastic.

15. Modular pedal according to claim 14, **characterised in that** said intermediate part (29) is joined elastically to the pedal body (2), preferably via a detachable clip.

16. Modular pedal according to claim 14, **characterised in that** the shoe (28) and the intermediate part (29) make up a single integral part.

17. Modular pedal according to any of the preceding claims, **characterised in that** the housing (18) has a jacket (30) on which the end (12) of the rod (13) rests.

## Claims (Claims for the following Contracting State(s): DE, ES, FR, GB, IT, SE)

1. Modular pedal for vehicles which comprises a pedal body (2) which pivots around an axis of rotation (3), and a support part (4) fixed to said pedal body (2), said support part (4) being made of a material different from that of which the pedal body (2) is made, said material preferably being plastic, said support part (4) comprising a socket (5) with a hole (6) for the axis of rotation (3), producing a joint between the pedal body (2) and said axis of rotation (3) via said support part (4).

2. Modular pedal according to claim 1, **characterised in that** the pedal body (2) comprises a housing (7) wherein the support part (4) is inserted, said support part (4) being joined to said pedal body (2) via an elastic joint, preferably a detachable clip.

3. Modular pedal according to claim 2, **characterised in that** the pedal body (2) has a cross-section that is substantially U-shaped, the housing (7) being delimited by said U-shape, the support part (4) comprises side projections (8), and said pedal body (2) comprises holes or supports (9) wherein said projections fit (8).

4. Modular pedal according to claim 3, **characterised in that** the pedal body (2) comprises two side extensions (10) which rest on part of the outer surface of the part (5) of the support part (4).

5. Modular pedal according to claim 4, **characterized in that** the outer surface of the part (5) is substantially cylindrical and the side projections (10) rest on approximately half of the outer perimeter of said socket (5).

6. Modular pedal according to claims 3, 4 or 5, **characterised in that** the support part (4) also comprises housing means (11) wherein the end (12) of a rod (13) is fitted via which a driving force is transmitted to an actuator, principally to a servo-brake or clutch cylinder.

7. Modular pedal according to claim 6, **characterised in that** the housing means (11) comprise an elastic holding device (14) in the entrance of the housing means (11), and side walls (15), said holding device (14) being joined to said side walls (15) and said side walls (15) being foldable.

8. Modular pedal according to claim 7, **characterised in that** each side wall (15) comprises at least one clip (16) which holds said side wall (15) in its assembly position, and which transmits the force exerted by the end (12) of the actuator onto the holding device (14) to the whole of the support part (4).

9. Modular pedal according to claim 6, **characterised in that** the housing (11) comprises a movable part (17) with a housing (18) wherein approximately half of the end (12) of the rod (13) is fitted, folding side housings (19) hingedly joined to the movable part (17), laminated side springs (20) joined to said folding housings (20), and a support surface (21) for the movable part (17), in such a way that, when during assembly the end (12) of the rod (13) presses on the housing (18), the laminated springs (20) are compressed, the movable part (17) is moved to rest on the surface (21), and the folding housings (19) support the end (12) of the rod (13) due to the action of the laminated springs (20).

10. Modular pedal according to claim 9, **characterised in that** the end (12) of the rod (13) is substantially spherical, the housing (18) has a substantially semi-spherical internal surface, and the folding housings (19) have an internal surface which are substantially a quarter of a sphere, said folding housings (19) also having a groove (21) for holding the rod (13).

11. Modular pedal according to claim 9 or 10, **characterised in that** the support part (4) also comprises folding side walls (22), each side wall (22) incorporating a flange (23), and the folding housings (19) comprise projections (24), said flanges (23) being shoed in the projections (24) when the end (13) of the rod (12) presses on the housing (11) and the movable part (10) presses on the surface (21).

12. Modular pedal according to claim 11, **characterised in that** the side walls (22) comprise longitudinal guide bars (25) and the longitudinal movable part (10) has grooves (26), said guide bars (25) being held in said grooves (26).

13. Modular pedal according to any of claims 9 to 12, **characterised in that** the surface (21) and the surface (27) of the movable part (10) are cylindrical.

14. Modular pedal according to any of the preceding claims, **characterised in that** it comprises a shoe (28) and an intermediate part (29) between said shoe (28) and the pedal body (2), said intermediate part (29) may be made of a different material from that of which the pedal body (2) is made, and said material preferably being plastic.

15. Modular pedal according to claim 14, **characterised in that** said intermediate part (29) is joined elastically to the pedal body (2), preferably via a detachable clip.

16. Modular pedal according to claim 14, **characterised in that** the shoe (28) and the intermediate part (29) make up a single integral part.

17. Modular pedal according to any of the preceding claims, **characterised in that** the housing (18) has a jacket (30) on which the end (12) of the rod (13) rests.

## Patentansprüche (Patentansprüche für folgende(n) Vertragsstaat(en): AT, BE, BG, CH, CY, CZ, DK, EE, FI, GR, HU, IE, LI, LU, MC, NL, PT, RO, SI, SK, TR)

1. Modulares Pedal für Fahrzeuge, umfassend einen Pedalkörper (2), der um eine Drehachse (3) dreht, und einen Trägerteil (4), der am Pedalkörper (2) befestigt ist, wobei es möglich ist, dass das Trägerteil (4) aus einem anderen Material hergestellt ist als der Pedalkörper (2) und das Material vorzugsweise Plastik ist, **dadurch gekennzeichnet, dass** das Trägerteil (4) einen Sockel (5) mit einem Loch (6) für die Drehachse (3) umfasst, so dass über das Trägerteil (4) ein Gelenk zwischen dem Pedalkörper (2) und der Drehachse (3) entsteht.

2. Modulares Pedal nach Anspruch 1, **dadurch gekennzeichnet, dass** der Pedalkörper (2) eine Aufnahme (7) umfasst, in das das Trägerteil (4) eingeführt wird, wobei das Trägerteil (4) mit dem Pedalkörper (2) über ein elastisches Gelenk, vorzugsweise einen abnehmbaren Bügel, verbunden wird.

3. Modulares Pedal nach Anspruch 2, **dadurch gekennzeichnet, dass** der Pedalkörper (2) einen Querschnitt besitzt, der im Wesentlichen U-förmig ist, wobei die Aufnahme (7) durch die U-Form abgegrenzt wird, das Trägerteil (4) seitliche Vorsprünge (8) umfasst und der Pedalkörper (2) Löcher oder Halterungen (9) umfasst, in die die Vorsprünge (8) einpassen.

4. Modulares Pedal nach Anspruch 3, **dadurch gekennzeichnet, dass** der Pedalkörper (2) zwei seitliche Verlängerungen (10) umfasst, die auf einem Teil der Außenfläche des Teils (5) des Trägerteils (4) ruhen.

5. Modulares Pedal nach Anspruch 4, **dadurch gekennzeichnet, dass** die Außenfläche des Teils (5) im Wesentlichen zylinderförmig ist und die seitlichen Vorsprünge (10) auf ungefähr der Hälfte des Außenumfangs des Sockels (5) ruhen.

6. Modulares Pedal nach Anspruch 3, 4 oder 5, **dadurch gekennzeichnet, dass** das Trägerteil (4) ebenso eine Aufnahmevorrichtung (11) umfasst, in die das Ende (12) eines Schiebers (13) einpasst, über den eine Antriebskraft an ein Stellelement, hauptsächlich eine Servobremse oder Kupplungszylinder, übertragen wird.

7. Modulares Pedal nach Anspruch 6, **dadurch gekennzeichnet, dass** die Aufnahmevorrichtung (11) eine elastische Halterungsvorrichtung (14) am Eingang der Aufnahmevorrichtung (11) und Seitenwände (15) umfasst, wobei die Halterungsvorrichtung (14) mit den Seitenwänden (15) verbunden ist und die Seitenwände (15) zusammenklappbar sind.

8. Modulares Pedal nach Anspruch 7, **dadurch gekennzeichnet, dass** jede Seitenwand (15) zumindest einen Bügel (16) umfasst, der die Seitenwand (15) in ihrer Einbaulage hält, und die Kraft, die vom Ende (12) des Stellelements auf die Halterungsvorrichtung (14) ausgeübt wird, auf das gesamte Trägerteil (4) überträgt.

9. Modulares Pedal nach Anspruch 6, **dadurch gekennzeichnet, dass** die Aufnahme (11) ein bewegliches Teil (17) mit einer Aufnahme (18) umfasst, in das ungefähr die Hälfte des Endes (12) des Schiebers (13) einpasst, die biegbaren seitlichen Aufnahmen (19) über ein Scharnier mit dem beweglichen Teil (17) verbunden sind, die gewalzten seitlichen Federn (20) mit der biegbaren Aufnahme (19) verbunden sind, so wie eine Halterungsfläche (21) für das bewegliche Teil (17), so dass, wenn während des Zusammenbaus das Ende (12) des Schiebers (13) auf die Aufnahme (18) drückt, die gewalzten Federn (20) zusammengedrückt werden, sich das bewegliche Teil (17) verlagert, um auf der Fläche (21) zu ruhen, und die biegbaren Aufnahmen (19) auf Grund der Wirkung der gewalzten Federn (20) das Ende (12) des Schiebers (13) halten.

10. Modulares Pedal nach Anspruch 9, **dadurch gekennzeichnet, dass** das Ende (12) des Schiebers (13) im Wesentlichen kugelförmig ist, die Aufnahme (18) eine im Wesentlichen halbkugelförmige Innenfläche besitzt, und die biegbaren Aufnahmen (19) Innenflächen besitzen, die im Wesentlichen eine Viertelkugel darstellen, wobei die biegbaren Aufnahmen (19) auch eine Rille (21) zum Halten des Schiebers (13) besitzen.

11. Modulares Pedal nach Anspruch 9 oder 10, **dadurch gekennzeichnet, dass** das Trägerteil (4) auch biegbare Seitenwände (22) umfasst, wobei jede Seitenwand (22) mit einem Flansch (23) versehen ist, und die biegbaren Aufnahmen (19) mit Vorsprüngen (24) versehen sind, wobei die Flansche (23) in die Vorsprünge (24) eingreifen, wenn das Ende (13) des Schiebers (12) auf die Aufnahme (11) drückt und das bewegliche Teil (10) auf die Fläche (21) drückt.

12. Modulares Pedal nach Anspruch 11, **dadurch gekennzeichnet, dass** die Seitenwände (22) mit Längsführungsstangen (25) und das bewegliche Längsteil (10) mit Rillen (26) versehen sind, wobei die Längsstangen (25) in den Rillen (26) gehalten werden.

13. Modulares Pedal nach einem der Ansprüche 9 bis 12, **dadurch gekennzeichnet, dass** die Fläche (21) und die Fläche (27) des beweglichen Teils (10) zylinderförmig sind.

14. Modulares Pedal nach einem der vorausgehenden Ansprüche, **dadurch gekennzeichnet, dass** es einen Schuh (28) und ein Zwischenstück (29) zwischen dem Schuh (28) und dem Pedalkörper (2) umfasst, wobei das Zwischenstück (29) aus einem anderen Material hergestellt sein kann als der Pedalkörper (2) und das Material vorzugsweise Plastik ist.

15. Modulares Pedal nach Anspruch 14, **dadurch gekennzeichnet, dass** das Zwischenstück (29) elastisch mit dem Pedalkörper (2) verbunden ist, vorzugsweise über einen abnehmbaren Bügel.

16. Modulares Pedal nach Anspruch 14, **dadurch gekennzeichnet, dass** der Schuh (28) und das Zwischenstück (29) ein einziges integriertes Teil bilden.

17. Modulares Pedal nach einem der vorausgehenden Ansprüche, **dadurch gekennzeichnet, dass** die Aufnahme (18) mit einem Mantel (30) versehen ist, auf dem das Ende (12) des Schiebers (13) ruht.

## Patentansprüche (Patentansprüche für folgende(n) Vertragsstaat(en): DE, ES, FR, GB, IT, SE)

1. Modulares Pedal für Fahrzeuge, umfassend einen Pedalkörper (2), der um eine Drehachse (3) dreht, und ein Trägerteil (4), das am Pedalkörper (2) befestigt ist, wobei das Trägerteil (4) aus einem anderen Material hergestellt ist, als der Pedalkörper (2), wobei das Material vorzugsweise Plastik ist, wobei das Trägerteil (4) einen Sockel (5) mit einem Loch (6) für die Drehachse (3) umfasst und so über das Trägerteil (4) ein Gelenk zwischen dem Pedalkörper (2) und der Drehachse (3) erzeugt.

2. Modulares Pedal nach Anspruch 1, **dadurch gekennzeichnet, dass** der Pedalkörper (2) eine Aufnahme (7) umfasst, in das das Trägerteil (4) eingeführt wird, wobei das Trägerteil (4) mit dem Pedalkörper (2) über ein elastisches Gelenk, vorzugsweise einen abnehmbaren Bügel, verbunden wird.

3. Modulares Pedal nach Anspruch 2, **dadurch gekennzeichnet, dass** der Pedalkörper (2) einen Querschnitt besitzt, der im Wesentlichen U-förmig ist, wobei die Aufnahme (7) durch die U-Form abgegrenzt wird, das Trägerteil (4) seitliche Vorsprünge (8) umfasst und der Pedalkörper (2) Löcher oder Halterungen (9) umfasst, in die die Vorsprünge (8) einpassen.

4. Modulares Pedal nach Anspruch 3, **dadurch gekennzeichnet, dass** der Pedalkörper (2) zwei seitliche Verlängerungen (10) umfasst, die auf einem Teil der Außenfläche des Teils (5) des Trägerteils (4) ruhen.

5. Modulares Pedal nach Anspruch 4, **dadurch gekennzeichnet, dass** die Außenfläche des Teils (5) im Wesentlichen zylinderförmig ist und die seitlichen Vorsprünge (10) auf ungefähr der Hälfte des Außenumfangs des Sockels (5) ruhen.

6. Modulares Pedal nach Anspruch 3, 4 oder 5, **dadurch gekennzeichnet, dass** das Trägerteil (4) ebenso eine Aufnahmevorrichtung (11) umfasst, in die das Ende (12) eines Schiebers (13) einpasst, über den eine Antriebskraft an ein Stellelement, hauptsächlich eine Servobremse oder Kupplungszylinder, übertragen wird.

7. Modulares Pedal nach Anspruch 6, **dadurch gekennzeichnet, dass** die Aufnahmevorrichtung (11) eine elastische Halterungsvorrichtung (14) am Eingang der Aufnahmevorrichtung (11) und Seitenwände (15) umfasst, wobei die Halterungsvorrichtung (14) mit den Seitenwänden (15) verbunden ist und die Seitenwände (15) zusammenklappbar sind.

8. Modulares Pedal nach Anspruch 7, **dadurch gekennzeichnet, dass** jede Seitenwand (15) zumindest einen Bügel (16) umfasst, der die Seitenwand (15) in ihrer Einbaulage hält, und die Kraft, die vom Ende (12) des Stellelements auf die Halterungsvorrichtung (14) ausgeübt wird, auf das gesamte Trägerteil (4) überträgt.

9. Modulares Pedal nach Anspruch 6, **dadurch gekennzeichnet, dass** die Aufnahme (11) ein bewegliches Teil (17) mit einer Aufnahme (18) umfasst, in das ungefähr die Hälfte des Endes (12) des Schiebers (13) einpasst, die biegbaren seitlichen Aufnahmen (19) über ein Scharnier mit dem beweglichen Teil (17) verbunden sind, die gewalzten seitlichen Federn (20) mit der biegbaren Aufnahme (19) verbunden sind, so wie eine Halterungsfläche (21) für das bewegliche Teil (17), so dass, wenn während des Zusammenbaus das Ende (12) des Schiebers (13) auf die Aufnahme (18) drückt, die gewalzten Federn (20) zusammengedrückt werden, sich das bewegliche Teil (17) verlagert, um auf der Fläche (21) zu ruhen, und die biegbaren Aufnahmen (19) auf Grund der Wirkung der gewalzten Federn (20) das Ende (12) des Schiebers (13) halten.

10. Modulares Pedal nach Anspruch 9, **dadurch gekennzeichnet, dass** das Ende (12) des Schiebers (13) im Wesentlichen kugelförmig ist, die Aufnahme (18) eine im Wesentlichen halbkugelförmige Innenfläche besitzt, und die biegbaren Aufnahmen (19) Innenflächen besitzen, die im Wesentlichen eine Viertelkugel darstellen, wobei die biegbaren Aufnahmen (19) auch eine Rille (21) zum Halten des Schiebers (13) besitzen.

11. Modulares Pedal nach Anspruch 9 oder 10, **dadurch gekennzeichnet, dass** das Trägerteil (4) auch biegbare Seitenwände (22) umfasst, wobei jede Seitenwand (22) mit einem Flansch (23) versehen ist, und die biegbaren Aufnahmen (19) mit Vorsprüngen (24) versehen sind, wobei die Flansche (23) in die Vorsprünge (24) eingreifen, wenn das Ende (13) des Schiebers (12) auf die Aufnahme (11) drückt und das bewegliche Teil (10) auf die Fläche (21) drückt.

12. Modulares Pedal nach Anspruch 11, **dadurch gekennzeichnet, dass** die Seitenwände (22) mit Längsführungsstangen (25) und das bewegliche Längsteil (10) mit Rillen (26) versehen sind, wobei die Längsstangen (25) in den Rillen (26) gehalten werden.

13. Modulares Pedal nach einem der Ansprüche 9 bis 12, **dadurch gekennzeichnet, dass** die Fläche (21) und die Fläche (27) des beweglichen Teils (10) zylinderförmig sind.

14. Modulares Pedal nach einem der vorausgehenden Ansprüche, **dadurch gekennzeichnet, dass** es einen Schuh (28) und ein Zwischenstück (29) zwischen dem Schuh (28) und dem Pedalkörper (2) umfasst, wobei das Zwischenstück (29) aus einem anderen Material hergestellt sein kann als der Pedalkörper (2) und das Material vorzugsweise Plastik ist.

15. Modulares Pedal nach Anspruch 14, **dadurch gekennzeichnet, dass** das Zwischenstück (29) elastisch mit dem Pedalkörper (2) verbunden ist, vorzugsweise über einen abnehmbaren Bügel.

16. Modulares Pedal nach Anspruch 14, **dadurch gekennzeichnet, dass** der Schuh (28) und das Zwischenstück (29) ein einziges integriertes Teil bilden.

17. Modulares Pedal nach einem der vorausgehenden Ansprüche, **dadurch gekennzeichnet, dass** die Aufnahme (18) mit einem Mantel (30) versehen ist, auf dem das Ende (12) des Schiebers (13) ruht.

## Revendications (Revendications pour l'(les) Etat(s) contractant(s) suivant(s): AT, BE, BG, CH, CY, CZ, DK, EE, FI, GR, HU, IE, LI, LU, MC, NL, PT, RO, SI, SK, TR)

1. Une pédale modulaire pour véhicules qui comprend un corps de pédale (2) qui pivote autour d'un axe de rotation (3) et un élément de support (4) fixé sur ledit corps de pédale (2), ledit élément de support (4) étant fabriqué avec un matériau différent de celui du corps de pédale (2), ledit matériau étant de préférence du plastique, **caractérisée en ce que** ledit élément de support (4) comprend une douille (5) avec un trou (6) pour l'axe de rotation (3), rendant possible l'emboîtement du corps de pédale (2) et dudit axe de rotation (3) via ledit élément de support (4).

2. Une pédale modulaire selon la revendication 1, **caractérisée en ce que** le corps de pédale (2) comprend une cavité (7) dans laquelle l'élément de support (4) est inséré, ledit élément de support (4) étant emboîté dans ledit corps de pédale (2) grâce à un joint élastique, de préférence une attache amovible.

3. Une pédale modulaire selon la revendication 2, **caractérisée en ce que** le corps de pédale (2) a une coupe transversale considérablement en forme de U, la cavité (7) étant délimitée par ladite forme en U, l'élément de support (4) comprend des bossages latéraux (8) et ledit corps de pédale (2) comprend des trous ou supports (9) dans lesquels s'insèrent lesdits bossages (8).

4. Une pédale modulaire selon la revendication 3, **caractérisée en ce que** le corps de pédale (2) comprend deux extensions latérales (10) qui reposent sur une partie de la paroi extérieure de la pièce (5) de l'élément de support (4).

5. Une pédale modulaire selon la revendication 4, **caractérisée en ce que** la paroi externe de la pièce (5) est considérablement cylindrique et les bossages latéraux (10) reposent sur approximativement la moitié du périmètre extérieur de ladite douille (5).

6. Une pédale modulaire selon les revendications 3, 4 ou 5, **caractérisée en ce que** l'élément de support (4) comprend également un logement (11) dans lequel l'extrémité (12) de la tige (13) est fixée et via laquelle une poussée est appliquée à un actionneur, principalement un servofrein ou un cylindre de débrayage.

7. Une pédale modulaire selon la revendication 6, **caractérisée en ce que** le logement (11) comprend un dispositif de fixation élastique (14) placé à l'entrée du logement (11) et des parois latérales (15), ledit dispositif de fixation élastique (14) étant relié aux dites parois latérales (15) et lesdites parois latérales 15 étant pliables.

8. Une pédale modulaire selon la revendication 7, **caractérisée en ce que** chaque paroi latérale (15) comprend au moins une attache (16) maintenant ladite paroi (15) en position fixée et qui transmet une force exercée par l'extrémité (12) de l'actionneur sur le dispositif de fixation (14) à l'ensemble de l'élément de support (4).

9. Une pédale modulaire selon la revendication 6, **caractérisée en ce que** le logement (11) comprend une pièce mobile (17) avec une cavité (18) dans laquelle environ la moitié de l'extrémité (12) de la tige (13) est insérée, les cavités latérales pliables (19) fixées à la pièce mobile au moyen d'une charnière (17), ressorts latéraux laminés (20) reliés aux dites cavités pliables (19) et une surface d'appui (21) pour la pièce mobile (17), de manière telle que, lorsque pendant l'assemblage, l'extrémité (12) de la tige (13) est appuyée contre la cavité (18), les ressorts laminés (20) sont compressés, la pièce mobile (17) est déplacée pour reposer sur la surface (21) et les cavités pliables (19) logent l'extrémité (12) de la tige (13) en raison de l'action exercée par les ressorts laminés (20).

10. Une pédale modulaire selon la revendication 9, **caractérisée en ce que** l'extrémité (12) de la tige (13) est considérablement sphérique, la cavité (18) a une surface interne considérablement semi-sphérique et les cavités pliables (19) ont une surface interne qui correspond considérablement à un quart de sphère, lesdites cavités pliables (19) étant également dotées d'une rainure (21) pour le maintien de la tige (13).

11. Une pédale modulaire selon les revendications 9 ou 10, **caractérisée en ce que** l'élément de support (4) comprend également des parois latérales pliables(22), chaque paroi latérale (22) incorporant une bride (23), et les cavités pliables (19) comprennent des bossages (24), lesdites brides (23) étant encastrées dans les bossages (24) lorsque l'extrémité (12) de la tige (13) est appuyée contre le logement (11) et la pièce mobile (10), contre la surface (21).

12. Une pédale modulaire selon la revendication 11, **caractérisée en ce que** les parois latérales (22) comprennent des barres de guidage longitudinales (25) et la pièce mobile longitudinale (10) a des rainures (26), lesdites barres (25) étant maintenues par lesdites rainures (26).

13. Une pédale modulaire selon les revendications 9 à 12, **caractérisée en ce que** la surface (21) et la surface (27) de la pièce mobile (10) sont cylindriques.

14. Une pédale modulaire selon l'une quelconque des revendications précédentes, **caractérisée en ce qu'**elle comprend un patin (28) et une pièce intermédiaire (29) entre ledit patin (28) et le corps de pédale (2), ladite pièce intermédiaire (29) peut être d'un matériau différent de celui du corps de pédale, ledit matériau étant de préférence du plastique.

15. Une pédale modulaire selon la revendication 14, **caractérisée en ce que** ladite pièce intermédiaire (29) est élastiquement fixée sur le corps de pédale (2), préférablement via une attache amovible.

16. Une pédale modulaire selon la revendication 14, **caractérisée en ce que** le patin (28) et la pièce intermédiaire (29) constituent un seul élément.

17. Une pédale modulaire selon l'une quelconque des revendications précédentes, **caractérisée en ce que** la cavité (18) a une chemise (30) sur laquelle repose l'extrémité (12) de la tige (13).

## Revendications (Revendications pour l'(les) Etat(s) contractant(s) suivant(s): DE, ES, FR, GB, IT, SE)

1. Une pédale modulaire pour véhicules qui comprend un corps de pédale (2) qui pivote autour d'un axe de rotation (3) et un élément de support (4) fixé sur ledit corps de pédale (2), ledit élément de support (4) étant fabriqué avec un matériau différent de celui du corps de pédale (2), ledit matériau étant de préférence du plastique, ledit élément de support (4) comprenant une douille (5) avec un trou (6) pour l'axe de rotation (3), rendant possible l'emboîtement du corps de pédale (2) et dudit axe de rotation (3) via ledit élément de support (4).

2. Une pédale modulaire selon la revendication 1, **caractérisée en ce que** le corps de pédale (2) comprend une cavité (7) dans laquelle l'élément de support (4) est inséré, ledit élément de support (4) étant emboîté dans ledit corps de pédale (2) grâce à un joint élastique, de préférence une attache amovible.

3. Une pédale modulaire selon la revendication 2, **caractérisée en ce que** le corps de pédale (2) a une coupe transversale considérablement en forme de U, la cavité (7) étant délimitée par ladite forme en U, l'élément de support (4) comprend des bossages latéraux (8) et ledit corps de pédale (2) comprend des trous ou supports (9) dans lesquels s'insèrent lesdits bossages (8).

4. Une pédale modulaire selon la revendication 3, **caractérisée en ce que** le corps de pédale (2) comprend deux extensions latérales (10) qui reposent sur une partie de la paroi extérieure de la pièce (5) de l'élément de support (4).

5. Une pédale modulaire selon la revendication 4, **caractérisée en ce que** la paroi externe de la pièce (5) est considérablement cylindrique et les bossages latéraux (10) reposent sur approximativement la moitié du périmètre extérieur de ladite douille (5).

6. Une pédale modulaire selon les revendications 3, 4 ou 5, **caractérisée en ce que** l'élément de support (4) comprend également un logement (11) dans lequel l'extrémité (12) de la tige (13) est fixée et via laquelle une poussée est appliquée à un actionneur, principalement un servofrein ou un cylindre de débrayage.

7. Une pédale modulaire selon la revendication 6, **caractérisée en ce que** le logement (11) comprend un dispositif de fixation élastique (14) placé à l'entrée du logement (11) et des parois latérales (15), ledit dispositif de fixation élastique (14) étant relié aux dites parois latérales (15) et lesdites parois latérales 15 étant pliables.

8. Une pédale modulaire selon la revendication 7, **caractérisée en ce que** chaque paroi latérale (15) comprend au moins une attache (16) maintenant ladite paroi (15) en position fixée et qui transmet une force exercée par l'extrémité (12) de l'actionneur sur le dispositif de fixation (14) à l'ensemble de l'élément de support (4).

9. Une pédale modulaire selon la revendication 6, **caractérisée en ce que** le logement (11) comprend une pièce mobile (17) avec une cavité (18) dans laquelle environ la moitié de l'extrémité (12) de la tige (13) est insérée, les cavités latérales pliables (19) fixées à la pièce mobile au moyen d'une charnière (17), ressorts latéraux laminés (20) reliés aux dites cavités pliables (19) et une surface d'appui (21) pour la pièce mobile (17), de manière telle que, lorsque pendant l'assemblage, l'extrémité (12) de la tige (13) est appuyée contre la cavité (18), les ressorts laminés (20) sont compressés, la pièce mobile (17) est déplacée pour reposer sur la surface (21) et les cavités pliables (19) logent l'extrémité (12) de la tige (13) en raison de l'action exercée par les ressorts laminés (20).

10. Une pédale modulaire selon la revendication 9, **caractérisée en ce que** l'extrémité (12) de la tige (13) est considérablement sphérique, la cavité (18) a une surface interne considérablement semi-sphérique et les cavités pliables (19) ont une surface interne qui correspond considérablement à un quart de sphère, lesdites cavités pliables (19) étant également dotées d'une rainure (21) pour le maintien de la tige (13).

11. Une pédale modulaire selon les revendications 9 ou 10, **caractérisée en ce que** l'élément de support (4) comprend également des parois latérales pliables(22), chaque paroi latérale (22) incorporant une bride (23), et les cavités pliables (19) comprennent des bossages (24), lesdites brides (23) étant encastrées dans les bossages (24) lorsque l'extrémité (12) de la tige (13) est appuyée contre le logement (11) et la pièce mobile (10), contre la surface (21).

12. Une pédale modulaire selon la revendication 11, **caractérisée en ce que** les parois latérales (22) comprennent des barres de guidage longitudinales (25) et la pièce mobile longitudinale (10) a des rainures (26), lesdites barres (25) étant maintenues par lesdites rainures (26).

13. Une pédale modulaire selon les revendications 9 à 12, **caractérisée en ce que** la surface (21) et la surface (27) de la pièce mobile (10) sont cylindriques.

14. Une pédale modulaire selon l'une quelconque des revendications précédentes, **caractérisée en ce qu'**elle comprend un patin (28) et une pièce intermédiaire (29) entre ledit patin (28) et le corps de pédale (2), ladite pièce intermédiaire (29) peut être d'un matériau différent de celui du corps de pédale, ledit matériau étant de préférence du plastique.

15. Une pédale modulaire selon la revendication 14, **caractérisée en ce que** ladite pièce intermédiaire (29) est élastiquement fixée sur le corps de pédale (2), préférablement via une attache amovible.

16. Une pédale modulaire selon la revendication 14, **caractérisée en ce que** le patin (28) et la pièce intermédiaire (29) constituent un seul élément.

17. Une pédale modulaire selon l'une quelconque des revendications précédentes, **caractérisée en ce que** la cavité (18) a une chemise (30) sur laquelle repose l'extrémité (12) de la tige (13).
